# EUROPÄISCHE PATENTSCHRIFT

(11) **EP 1 921 724 B1**
(45) Veröffentlichungstag und Bekanntmachung des Hinweises auf die Patenterteilung: **02.10.2013**
(21) Anmeldenummer: 07119359.3
(22) Anmeldetag: 26.10.2007
(51) Int. Cl.: H02G 13/00

(54) **Distanzhalter zur Sicherstellung des Trennungsabstands für teilisolierte Blitzschutzanlagen**
Spacer for ensuring a gap for partially insulated lightning protection systems
Dispositif de maintien à distance destiné à garantir l'intervalle de séparation entre des installations de paratonnerre partiellement isolées

(30) Priorität: 08.11.2006 DE 102006052744; 30.11.2006 DE 102006056563
(43) Veröffentlichungstag der Anmeldung: 14.05.2008
(73) Patentinhaber: DEHN + SÖHNE GMBH + CO KG, 92318 Neumarkt/Opf (DE)
(72) Erfinder: Brocke, Ralph, 98693 Ilmenau (DE); Wechsler, Andre, 91790 Bergen (DE)
(74) Vertreter: Meissner, Bolte & Partner

(56) Entgegenhaltungen:
- DE-A1- 3 836 620

## Beschreibung

Die Erfindung betrifft einen Distanzhalter zur Sicherstellung des Trennungsabstands für teilisolierte Blitzschutzanlagen, umfassend ein Rohr, einen Stab, ein Profil oder Hohlprofil mit an den gegenüberliegenden Enden vorgesehenen Mitteln zum Befestigen jeweils der blitzstromführenden Leitung einerseits und Fixieren an der baulichen Anlage des zu schützenden Objekts andererseits, gemäß Oberbegriff des Patentanspruchs 1.

Im Bereich des Gebäudeblitzschutzes werden nach dem Stand der Technik für teilisolierte Blitzschutzanlagen Isolatoren aus glasfaserverstärkten Kunststoffstäben bzw. GFK-Rohre als Distanzhalter verwendet, um den benötigten Trennungsabstand zwischen der blitzstromführenden Leitung und dem zu schützenden Objekt der baulichen Anlage einzuhalten.

Verwiesen sei hier beispielsweise auf den Distanzhalter zur Einhaltung des Trennungsabstands DEHNiso der Firma DEHN + SÖHNE GmbH + Co. KG, Neumarkt.

DE 38 36 620 A1 (DEHN & SOEHNE [DE]) 3. Mai 1990 (1990-05-03) wird als nächstliegender Stand der Technik gegenüber dem Gegenstand des Anspruchs 1 angesehen. Es offenbart:
Distanzhalter zur Sicherstellung des Trennungsabstands für teilisolierte Blitzschutzanlagen, umfassend ein Rohr, einen Stab, ein Profil oder Hohlprofil, mit an den gegenüberliegenden Enden vorgesehenen Mitteln zum Befestigen jeweils der blitzstromführenden Leitung einerseits und Fixieren an der baulichen Anlage des zu schützenden Objekts andererseits.

Da die Überschlagsfestigkeit eines einfachen Isolators mit dessen Grenzfläche Isolierstoff - Luft aufgrund der physikalischen Zusammenhänge wesentlich geringer ist als die einer gleich langen homogenen Luftstrecke, muss der Distanzhalter entsprechend länger sein, um die äquivalente Isolierstrecke in Luft abzubilden Eine zusätzliche Fremdschicht auf der Isolieroberfläche, z.B. durch atmosphärische Bedingungen, wie Niederschlag, verringert die Überschlagsfestigkeit der Grenzfläche noch weiter.

Auf dem Gebiet des teilisolierten Blitzschutzes ergeben sich spezielle Anforderungen an den eingesetzten Isolator. Im Gegensatz zur Wechselspannungstechnik liegt hier die Spannung nicht ständig am Isolator an, sondern nur während der Dauer des Blitzeinschlags im µs-Bereich. Es muss also der Distanzhalter für sehr kurze, aber recht hohe Impulsspannungen ausgelegt sein.

Bei einem Blitzschlag in eine teilisolierte Blitzschutzanlage wird der Blitzstrom über die Fangeinrichtung, den Ableiter und die Erdungsanlage in das Erdreich geführt. Dabei stellt die Blitzschutzanlage für den Blitzstrom ein Leitersystem mit einer Induktivität dar.
Bei sehr steilen Anstiegszeiten des Blitzstroms können deshalb sehr hohe kurzzeitige Impulsspannungen an den Distanzhaltern anliegen. Vor allem bei einem negativen Folgeblitz werden sehr hohe Scheitelwerte im MV-Bereich mit einer Impulsbreite von einigen 100 ns erreicht. Die einzusetzenden Distanzhalter im teilisolierten Blitzschutzsystem müssen derartigen Impulsspannungen standhalten. Ist dies nicht der Fall, kann es zu einem Überschlag entlang des Isolators und zur Einkopplung von Teilblitzströmen in das zu schützende Gebäude oder die zu schützende Anlage kommen.

Aus dem Vorgenannten ist es daher Aufgabe der Erfindung, einen weiterentwickelten Distanzhalter zur Sicherstellung des Trennungsabstands für teilisolierte Blitzschutzanlagen anzugeben, welcher über eine hohe Gleitentladungsfestigkeit verfügt und bei dem der Faktor zwischen der geometrischen Länge des Distanzhalters und der äquivalenten Luftstrecke verbessert ist.

Die Lösung der Aufgabe der Erfindung erfolgt mit einem Distanzhalter gemäß der Merkmalskombination nach Patentanspruch 1, wobei die Unteransprüche mindestens zweckmäßige Ausgestaltungen und Weiterbildungen darstellen.

Der erfindungsgemäße Distanzhalter besteht aus einem Rohr, einem Stab, einem Profil oder Hohlprofil. Deren Material oder eine vorgesehene Beschichtung gewährleistet eine gleichmäßige Feldverteilung bei blitztypischen hohen, kurzzeitigen Impulsspannungen. Das Material für die Beschichtung weist halbleitfähige bzw. halbleitende Eigenschaften auf.

In einer bevorzugten Ausgestaltung besitzt das Material oder die Beschichtung einen ohmschen Widerstand im Bereich von einigen Ω/m bis MΩ/m. Bevorzugt liegt der ohmsche Widerstand im Bereich von 500Ω/m und 500kΩ/m.

Das Rohr, der Stab, das Profil oder Hohlprofil (im Folgenden wird beispielhaft lediglich von einem Rohr gesprochen) besteht aus einem Isolierstoff mit einer äußeren halbleitenden Schicht oder halbleitenden Umhüllung. Der Isolierstoff kann beispielsweise glasfaserverstärkter Kunststoff (GFK) sein.

Die äußere halbleitende Schicht oder Umhüllung kann z.B. aus einem selbstverschweißenden halbleitenden Band, aus einem halbleitenden Schrumpfschlauch oder einem halbleitenden Lack bestehen.

Das Material oder die erfindungsgemäße Beschichtung kann auch aus einem halbleitenden kohlenstofffaserverstärkten Kunststoff (CFK) bestehen oder einen derartigen Kunststoff enthalten.

Ebenso ist denkbar, dass dem Isolierstoff selbst leitfähige Komponenten zugefügt sind, so dass dieser halbleitende Eigenschaften erhält.

Das Rohr kann auch aus einer koaxialen Anordnung mit isolierendem Kern oder Innenteil und einer äußeren Umhüllung aus einem halbleitenden Material bestehen.

In diesem Fall kann das Innenteil z.B. aus GFK und die äußere Umhüllung aus CFK ausgeführt sein.

Zur Verlängerung des Kriechweges ist mindestens ein tellerartiger Schirm auf dem Distanzhalter, diesen umgebend, vorgesehen, wobei der Schirm mit dem Material oder der Beschichtung, welche halbleitfähige Eigenschaften aufweist, verbunden ist.

Weiterhin besteht die Möglichkeit, eine äußere Schutzumhüllung vorzusehen, die das Rohr vollständig umgibt.

Das Material oder die Beschichtung kann bei einer ersten Ausführungsform galvanisch mit der blitzstromführenden Leitung über entsprechende Anschlussmittel in Verbindung stehen. Ebenso ist bei dieser ersten Ausführungsform vorgesehen, dass das Material oder die Beschichtung mit den Mitteln zum Fixieren an der baulichen Anlage in Verbindung steht.

Bei einer weiteren Ausführungsform kann das Material oder die Beschichtung kapazitiv mit der blitzstromführenden Leitung und/oder den Mitteln zum Fixieren an der baulichen Anlage gekoppelt werden.

Die Mittel zum Fixieren an der baulichen Anlage liegen auf Erdpotential oder auf freiem Potential.
Durch die vorgesehene zusätzliche halbleitfähige Schicht oder das halbleitfähige Material verbessert sich die Gleitentladungsfestigkeit und damit der Faktor zwischen der geometrischen Länge des Distanzhalters und der äquivalenten Luftstrecke. Wie bereits erläutert, kann anstelle einer halbleitfähigen Schicht auch ein Distanzhalter verwendet werden, der insgesamt aus einem halbleitenden Material besteht.

Bei Distanzhaltern aus Isolierstoffen gemäß dem Stand der Technik ergibt sich keine gleichmäßige tangentiale Feldstärke entlang der Oberfläche. Vielmehr konzentriert sich das Feld im sogenannten Tripel-Punkt an der Elektrode, wodurch Vorentladungen einsetzen und es bei entsprechend hoher Spannungsamplitude zu einem Überschlag kommen kann.

Mit der halbleitenden Schicht wird durch deren ohmsche Komponente eine gleichmäßige Feldverteilung erreicht, welche je nach Leitfähigkeit Einfluss auf die Gleitüberschlagsfestigkeit hat.

Wenn der halbleitende Widerstandsbelag ohmsche Werte im unteren Bereich besitzt, so fließt ein größerer Strom als bei einer Schicht mit großem Widerstandswert. Die Feldverteilung entlang der Grenzfläche wird in diesem Fall durch die ohmsche Komponente dominiert. Hierdurch wird das elektrische Feld über die Länge des Distanzhalters gleichmäßig verteilt, so dass das Gleit-überschlagsverhalten im Gegensatz zum bekannten Isolierstab deutlich verbessert ist.

Die halbleitende Schicht besitzt erfindungsgemäß einen ausreichend großen Querschnitt zur Stromtragfähigkeit des im Blitzeinschlagfalls fließenden Impulsstroms.

Die Erfindung soll nachstehend anhand von Ausführungsbeispielen sowie unter Zuhilfenahme von Figuren näher erläutert werden.

### Hierbei zeigen:

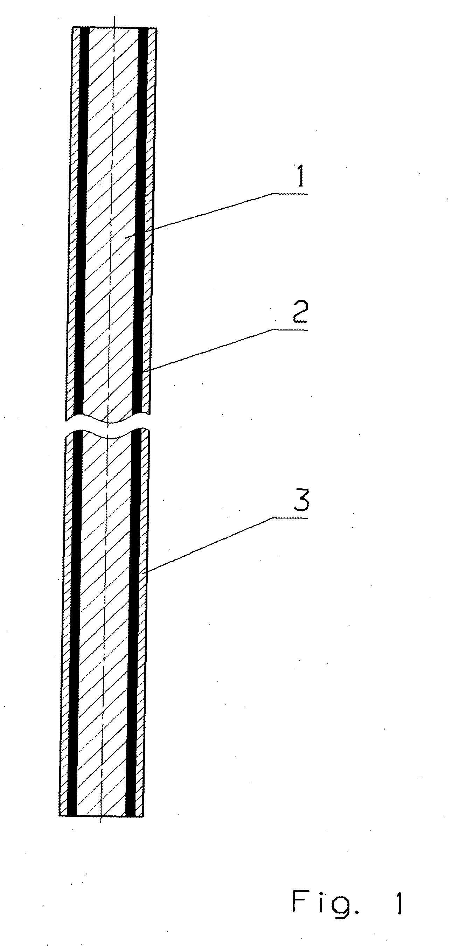

- Fig. 1: eine Prinzipdarstellung eines Distanzhalters noch ohne Anschluss- und Befestigungselemente im Querschnitt;
- Fig. 2: eine erste Ausführungsform eines Distanzhalters gemäß der Erfindung mit galvanischer Kopplung zu den Anschluss- und Befestigungsmitteln;
- Fig. 3: eine Darstellung ähnlich derjenigen nach Fig. 2, jedoch mit kapazitiver Kopplung zu den Anschluss- und Befestigungselementen und
- Fig. 4: eine weitere Ausführungsform des erfindungsgemäßen Distanzhalters mit mehreren umfangsseitig auf der Oberfläche fixierten Schirmen zur Verlängerung des Kriechweges.

Der Distanzhalter gemäß den Ausführungsbeispielen besteht aus einem Isolierstoff 1, z.B. in Form eines GFK-Stabes oder GFK-Rohres.

Auf dem Isolierstoff 1 ist eine halbleitende Schicht 2 aufgebracht, um die Gleitentladungsfestigkeit und damit den Faktor zwischen der geometrischen Länge des Distanzhalters und der äquivalenten Luftstrecke zu verbessern.

Anstelle einer halbleitfähigen Schicht 2 kann auch ein Distanzhalter Verwendung finden, der insgesamt aus einem halbleitenden Material besteht.

Zum Schutz vor Beschädigungen oder aus optischen Gründen kann auf die halbleitende Schicht 2 noch eine Schutzumhüllung 3 als weitere Schicht aufgebracht oder angeordnet werden.

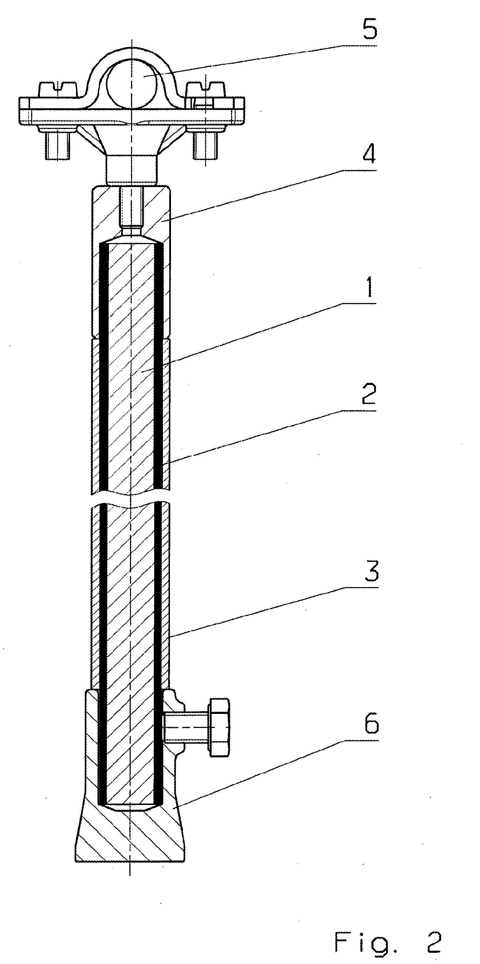

Gemäß den Darstellungen nach Fig. 2 bis 4 ist eine Hülse 4 an einem Ende des Distanzhalters befindlich. Diese Hülse 4 besitzt bei der gezeigten Ausführungsform eine Innengewindebohrung. Diese Innengewindebohrung nimmt eine Klemmschelle auf, welche wiederum die blitzstromführende Leitung 5 fixiert.

Sowohl die Klemmschelle als auch die Hülse 4 bestehen aus einem leitenden Material. Zwischen der Innenseite der Hülse 4 ist gemäß der Fig. 2 eine galvanische Verbindung zur halbleitenden Schicht 2 hergestellt.

Eine ebenso galvanische Verbindung besteht zum gegenüberliegenden Anschlusselement 6.
Dieses Anschlusselement 6 dient dem Fixieren des Distanzhalters an der nicht gezeigten baulichen Anlage des zu schützenden Objekts.

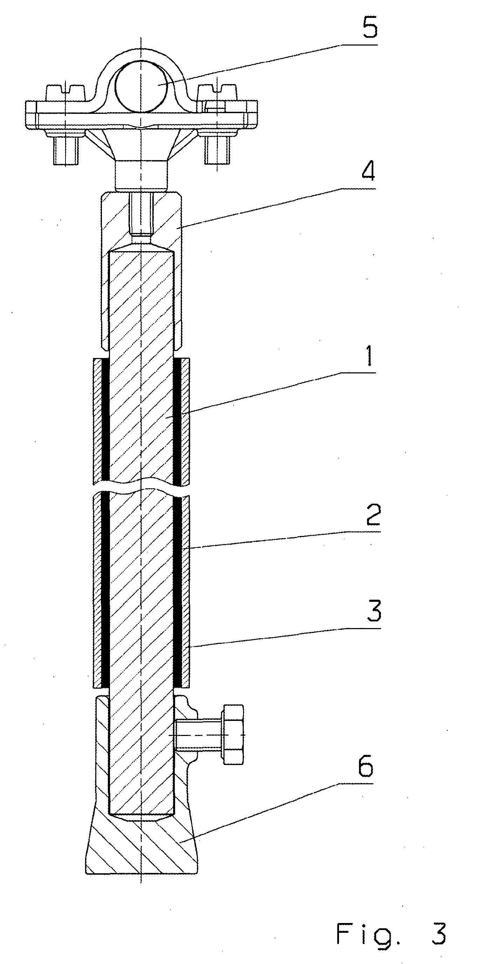

Bei der Ausführungsform nach Fig. 3 wird auf eine kapazitive Kopplung zwischen der Hülse 4 bzw. dem Anschlusselement 6 und der halbleitenden Schicht 2 abgestellt.

Es wird also der Strom, der über die halbleitfähige Schicht 2 fließt, entweder galvanisch, durch Verbindung der Schicht 2 mit der Hülse 4 bzw. dem Anschlusselement 6 nach Fig. 2 oder kapazitiv nach Fig. 3 eingekoppelt.

Die Hülse 4 mit Klemme liegt im Blitzeinschlagsfall auf Potential des blitzstromführenden Leiters, während das gegenüberliegende Anschlusselement 6 auf Erdpotential oder auf freiem Potential liegen kann.

Da der Distanzhalter ausschließlich im Bereich des Blitzschutzes eingesetzt wird, wo die Spannungsbelastungen im µs-Bereich liegen, bestehen keine thermischen Probleme für den Isolierstoff oder das Material oder die Beschichtung mit halbleitfähigen Eigenschaften.

Der Widerstandswert des halbleitenden Materials bzw. der halbleitenden Schicht kann im Bereich von einigen Ω/m bis in den Bereich von einigen MΩ/m liegen, vorzugsweise im Bereich zwischen 500Ω/m und 500kΩ/m.

Das Erzeugen der Leitfähigkeit entlang des Distanzhalterrohrs kann z.B. durch Aufbringen eines selbstverschweißenden halbleitfähigen Bandes, Aufschrumpfen eines halbleitfähigen Schrumpfschlauchs oder Aufbringen eines halbleitfähigen Lackes realisiert werden.

Ebenso besteht die Möglichkeit der Bildung einer halbleitfähigen äußeren Schicht auf dem Isolator durch Zusatz von leitfähigen Materialien im Isolierstoff, z.B. durch die Anwendung eines glasfaserverstärkten Kunststoffmaterials mit einer äußeren, leitfähigen kohlenstofffaserverstärkten Kunststoffschicht.

Ausgestaltend besteht die Möglichkeit, dass der Distanzhalter selbst aus einem halbleitfähigen Material, z.B. CFK, einem Hybrid aus GFK und CFK oder anderen halbleitenden Kunststoffen besteht.

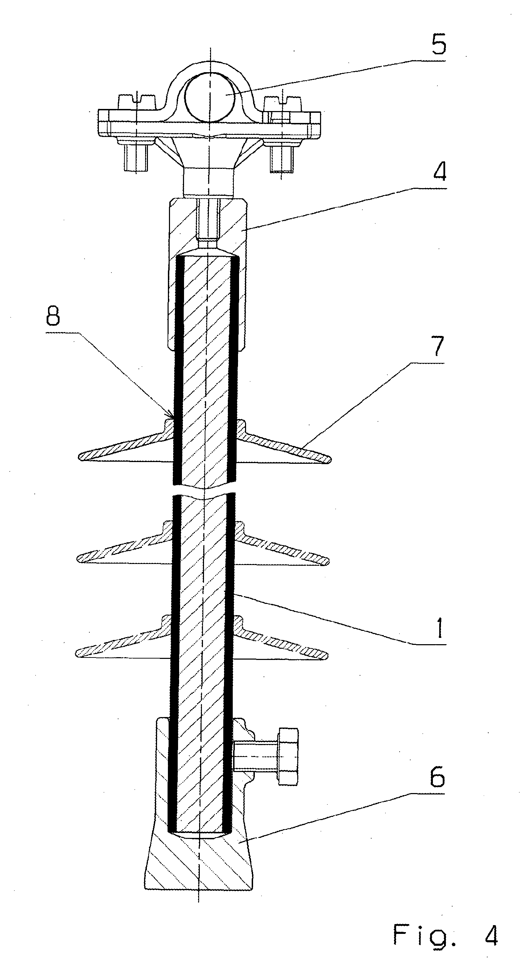

Gemäß der Darstellung nach Fig. 4 ist als weitere Maßnahme zur Verbesserung der Gleitentladungsfestigkeit vorgesehen, zusätzlich zur halbleitenden Schicht 2 den Kriechweg durch Schirme 7 zu verlängern, welche an der Stelle 8 mit der halbleitfähigen Schicht 2 oder Umhüllung verbunden sind.

Die Schirme 7 können sowohl elektrisch leitend als auch nichtleitend ausgeführt werden. Erfindungsgemäß soll sich mindestens ein Schirm im Verlauf der Isolierstrecke befinden.

Obwohl bei den vorstehend geschilderten Ausführungsbeispielen von einem Isolierrohr bzw. einem rohrförmigen Distanzhalter gesprochen wurde, kann der Distanzhalter unter Beachtung der erfindungsgemäßen Lehre auch aus einem Profil oder Hohlprofil mit beliebigen Querschnittsflächen bestehen.

Maßgeblich ist, dass mindestens über Abschnitte die Längsausdehnung des Distanzhalters und mindestens oberflächenseitig der Distanzhalter aus einem Material besteht und/oder eine Beschichtung aufweist, welche eine gleichmäßige Feldverteilung bei blitztypischen hohen, kurzzeitigen Impulsspannungen gewährleistet.

### Bezugszeichenliste

- 1: Isolierstoff
- 2: halbleitende Schicht
- 3: Schutzumhüllung
- 4: Hülse als Teil der Mittel zum Befestigen der blitzstromführenden Leitung
- 5: blitzstromführende Leitung
- 6: Anschlusselement
- 7: Schirm
- 8: Kontaktstelle

## Patentansprüche

1. Distanzhalter zur Sicherstellung des Trennungsabstands für teilisolierte Blitzschutzanlagen, umfassend ein Rohr, einen Stab, ein Profil oder Hohlprofil, mit an den gegenüberliegenden Enden vorgesehenen Mitteln zum Befestigen jeweils der blitzstromführenden Leitung einerseits und Fixieren an der baulichen Anlage des zu schützenden Objekts andererseits,
**dadurch gekennzeichnet, dass**
das Rohr, der Stab, das Profil oder das Hohlprofil mindestens über Abschnitte seiner Längsausdehnung und mindestens an der Oberfläche aus einem Material besteht und/oder eine Beschichtung aufweist, welche eine gleichmäßige Feldverteilung bei blitztypischen hohen, kurzzeitigen Impulsspannungen gewährleistet, wobei das Material oder die Beschichtung halbleitende Eigenschaften aufweist.

2. Distanzhalter nach Anspruch 1,
**dadurch gekennzeichnet, dass**
das Material oder die Beschichtung einen ohmschen Widerstand im Bereich von einigen Ω/m bis MΩ/m, bevorzugt zwischen 500Ω/m und 500kΩ/m besitzt.

3. Distanzhalter nach einem der vorangegangenen Ansprüche,
**dadurch gekennzeichnet, dass**
das Rohr, der Stab, das Profil oder Hohlprofil aus einem Isolierstoff (1) mit äußerer halbleitender Schicht (2) oder Umhüllung besteht.

4. Distanzhalter nach Anspruch 3,
**dadurch gekennzeichnet, dass**
der Isolierstoff ein glasfaserverstärkter Kunststoff (GFK) ist.

5. Distanzhalter nach Anspruch 3 oder 4,
**dadurch gekennzeichnet, dass**
die äußere halbleitende Schicht (2) oder Umhüllung ein selbstverschweißendes halbleitendes Band, ein halbleitender Schrumpfschlauch oder ein halbleitender Lack ist.

6. Distanzhalter nach einem der Ansprüche 1 oder 2,
**dadurch gekennzeichnet, dass**
das Material oder die Beschichtung aus einem halbleitenden kohlenstofffaserverstärkten Kunststoff (CFK) besteht.

7. Distanzhalter nach Anspruch 3 oder 4,
**dadurch gekennzeichnet, dass**
der Isolierstoff leitfähige Komponenten enthält.

8. Distanzhalter nach Anspruch 1,
**dadurch gekennzeichnet, dass**
das Rohr, der Stab, das Profil oder Hohlprofil aus einer koaxialen Anordnung mit isolierendem Kern oder Innenteil und einer äußeren Umhüllung aus einem halbleitenden Material besteht.

9. Distanzhalter nach Anspruch 8,
**dadurch gekennzeichnet, dass**
der Kern oder das Innenteil aus glasfaservertärktem Kunststoff und die äußere Umhüllung aus kohlenstofffaserverstärktem Kunststoff besteht.

10. Distanzhalter nach einem der vorangegangenen Ansprüche,
**dadurch gekennzeichnet, dass**
zur Verlängerung des Kriechweges mindestens ein Schirm (7) auf dem Distanzhalter, diesen umgebend, vorgesehen ist, wobei der Schirm (7) mit dem Material oder der Beschichtung verbunden (8) ist.

11. Distanzhalter nach einem der vorangegangenen Ansprüche,
**dadurch gekennzeichnet, dass**
eine äußere Schutzumhüllung (3) das Rohr, den Stab, das Profil oder Hohlprofil umgibt.

12. Distanzhalter nach einem der vorangegangenen Ansprüche,
**dadurch gekennzeichnet, dass**
das Material oder die Beschichtung galvanisch mit der blitzstromführenden Leitung (5) in Verbindung steht.

13. Distanzhalter nach einem der vorangegangenen Ansprüche,
**dadurch gekennzeichnet, dass**
das Material oder die Beschichtung galvanisch mit den Mitteln zum Fixieren (6) an der baulichen Anlage in Verbindung steht.

14. Distanzhalter nach einem der Ansprüche 1 bis 11,
**dadurch gekennzeichnet, dass**
das Material oder die Beschichtung kapazitiv mit der blitzstromführenden Leitung (5) und/oder den Mitteln zum Fixieren (6) an der baulichen Anlage gekoppelt ist.

15. Distanzhalter nach einem der vorangegangenen Ansprüche,
**dadurch gekennzeichnet, dass**
die Mittel zum Fixieren an der baulichen Anlage auf Erdpotential oder auf freiem Potential liegen.

## Claims

1. A spacer for ensuring the gap for partially insulated lightning protection systems, comprising a tube, a rod, a profile or hollow profile, having means provided at the opposite ends for fastening the lightning current-conducting line, on the one hand, and fixing to the physical structure of the object to be protected, on the other,
**characterized in that**
the tube, rod, profile or hollow profile, at least over sections of its longitudinal extension and at least on the surface, consists of a material and/or has a coating which ensures a uniform field distribution during lightning-typical high short-time pulse voltages, with the material or coating having semiconducting properties.

2. The spacer according to claim 1,
**characterized in that**
the material or the coating has an ohmic resistance in the range of several Ω/m to MΩ/m, preferably of between 500 Ω/m and 500 kΩ/m.

3. The spacer according to any one of the preceding claims,
**characterized in that**
the tube, rod, profile or hollow profile consists of an insulating material (1) having an outer semiconducting layer (2) or sheathing.

4. The spacer according to claim 3,
**characterized in that**
the insulating material is a glass fiber-reinforced plastic (GFRP) material.

5. The spacer according to claim 3 or 4,
**characterized in that**
the outer semiconducting layer (2) or sheathing is a self-sealing semiconducting tape, a semiconducting shrink-on sleeve or a semiconducting varnish.

6. The spacer according to any one of claims 1 or 2,
**characterized in that**
the material or coating is made of a semiconducting carbon fiber-reinforced plastic (CFRP) material.

7. The spacer according to claim 3 or 4,
**characterized in that**
the insulating material contains conductive components.

8. The spacer according to claim 1,
**characterized in that**
the tube, rod, profile or hollow profile is comprised of a coaxial arrangement having an insulating core or inner part, and an external sheathing made of a semiconducting material.

9. The spacer according to claim 8,
**characterized in that**
the core or inner part consists of a glass-fiber reinforced plastic material and the external sheathing of a carbon fiber-reinforced plastic material.

10. The spacer according to any one of the preceding claims,
**characterized in that**
at least one shield (7) is provided on the spacer and surrounding same for extending the creepage distance, wherein the shield (7) is in connection (8) with the material or coating.

11. The spacer according to any one of the preceding claims,
**characterized in that**
an outer protective sheath (3) surrounds the tube, rod, profile or hollow profile.

12. The spacer according to any one of the preceding claims,
**characterized in that**
the material or coating is in galvanic connection with the lightning current-conducting line (5).

13. The spacer according to any one of the preceding claims,
**characterized in that**
the material or coating is in galvanic connection with means for fixing (6) to the physical structure.

14. The spacer according to any one of claims 1 to 11,
**characterized in that**
the material or coating is in capacitive coupling with the lightning current-conducting line (5) and/or the means for fixing (6) to the physical structure.

15. The spacer according to any one of the preceding claims,
**characterized in that**
the means for fixing to the physical structure are at ground potential or floating potential.

## Revendications

1. Dispositif de maintien de distance destiné à garantir l'intervalle de séparation entre des installations de paratonnerre partiellement isolées, comprenant un tube, une tige, un profilé ou un profilé creux, avec des moyens, prévus aux extrémités opposées, pour la fixation de la ligne qui mène le courant de foudre d'une part et pour la fixation sur l'installation structurelle de l'objet à protéger d'autre part,
**caractérisé en ce que**
le tube, la tige, le profilé ou le profilé creux, au moins sur des tronçons de son extension longitudinale et au moins à la surface, est en un matériau et/ou présente un revêtement qui garantit une répartition régulière des champs en cas de brèves impulsions de tension élevées typiques de la foudre, et le matériau ou le revêtement présente des propriétés semiconductrices.

2. Dispositif de maintien de distance selon la revendication 1, **caractérisé en ce que** le matériau ou le revêtement possède une résistance ohmique dans la plage de quelques Ω/m à quelques MΩ/m, de préférence entre 500 Ω/m et 500 kΩ/m.

3. Dispositif de maintien de distance selon l'une des revendications précédentes,
**caractérisé en ce que** le tube, la tige, le profilé ou le profilé creux est en un matériau isolant (1) avec une couche (2) ou une enveloppe extérieure semiconductrice.

4. Dispositif de maintien de distance selon la revendication 3,
**caractérisé en ce que** le matériau isolant est une matière plastique renforcée par des fibres de verre (GFK).

5. Dispositif de maintien de distance selon la revendication 3 ou 4,
**caractérisé en ce que** la couche (2) ou l'enveloppe extérieure semiconductrice est une bande semiconductrice auto-soudable, un tube rétractable semi-conducteur ou une peinture semiconductrice.

6. Dispositif de maintien de distance selon l'une des revendications 1 ou 2,
**caractérisé en ce que** le matériau ou le revêtement est une matière plastique semiconductrice renforcée par des fibres de carbone (CFK).

7. Dispositif de maintien de distance selon la revendication 3 ou 4,
**caractérisé en ce que** le matériau isolant contient des composants conducteurs.

8. Dispositif de maintien de distance selon la revendication 1,
**caractérisé en ce que** le tube, la tige, le profilé ou le profilé creux est constitué(e) d'un agencement coaxial avec un noyau ou une partie intérieure isolant(e) et une enveloppe extérieure en matériau semi-conducteur.

9. Dispositif de maintien de distance selon la revendication 8,
**caractérisé en ce que** le noyau ou la partie intérieure est en matière plastique renforcée par des fibres de verre, et l'enveloppe extérieure est en matière plastique renforcée par des fibres de carbone.

10. Dispositif de maintien de distance selon l'une des revendications précédentes,
**caractérisé en ce que** pour prolonger la ligne de fuite, il est prévu au moins un écran (7) sur le dispositif de maintien de distance, de manière à entourer celui-ci, ledit écran (7) étant relié (8) au matériau ou au revêtement.

11. Dispositif de maintien de distance selon l'une des revendications précédentes,
**caractérisé en ce qu'**une enveloppe de protection extérieure (3) entoure le tube, la tige, le profilé ou le profilé creux.

12. Dispositif de maintien de distance selon l'une des revendications précédentes,
**caractérisé en ce que** le matériau ou le revêtement est en liaison galvanique avec la ligne (5) qui mène le courant de foudre.

13. Dispositif de maintien de distance selon l'une des revendications précédentes,
**caractérisé en ce que** le matériau ou le revêtement est en liaison galvanique avec les moyens pour la fixation (6) sur l'installation structurelle.

14. Dispositif de maintien de distance selon l'une des revendications 1 à 11,
**caractérisé en ce que** le matériau ou le revêtement est couplé de manière capacitive avec la ligne (5) qui mène le courant de foudre et/ou avec les moyens pour la fixation (6) sur l'installation structurelle.

15. Dispositif de maintien de distance selon l'une des revendications précédentes,
**caractérisé en ce que** les moyens pour la fixation sur l'installation structurelle sont au potentiel de terre ou à un potentiel libre.
